# EUROPÄISCHE PATENTANMELDUNG

(11) **EP 2 402 210 A2**
(43) Veröffentlichungstag der Anmeldung: **04.01.2012**
(21) Anmeldenummer: 11005369.1
(22) Anmeldetag: 30.06.2011
(51) Int. Cl.: B60P 3/10, B62D 51/00

(54) **Selbstfahrender Bootstransporter**

(30) Priorität: 30.06.2010 DE 102010025666
(71) Anmelder: Pils, Franz, 82266 Inning (DE)
(72) Erfinder: Pils, Franz, 82266 Inning (DE)
(74) Vertreter: Lang, Friedrich

(57) **Zusammenfassung**

Die Erfindung betrifft einen selbstfahrenden Bootstransporter zwei Kettenlaufwerken. Die beiden Kettenlaufwerke sind unabhängig voneinander vertikal auslenkbar an einem Tragrahmen aufgehängt und separat antreibbar und steuerbar. Es ist mindestens ein drehbares Stützrad in der Art eines Bugrades vorhanden, so dass der Bootstransporter an mindestens drei Stützpunkten gestützt ist.

## Beschreibung

Die Erfindung betrifft einen selbstfahrenden amphibischen Transporter für ein Boot, eine Yacht oder dergleichen, nachfolgend als Bootstransporter bezeichnet.

Mittels eines derartigen Transporters kann ein Boot, eine Yacht oder dergleichen zu Wasser gelassen, vom Wasser an Land genommen und an Land bewegt werden. Der Bootstransporter wird mit dem Boot soweit ins Wasser gebracht, bis das Boot darüber aufschwimmt. In umgekehrter Reihenfolge kann ein Boot auch vom Wasser an Land gebracht werden. Das Boot schwimmt dann über den Bootstransporter, wird dort gesichert und an Land transportiert. Bootstransporter dieser Art werden auch als Slipwagen bezeichnet.

Ein Bootstransporter dieser Art ist aus WO 9735742 A1 bekannt. Ferner ist ein amphibischer Bootstransporter in GB 2151560 A beschrieben, welcher an den beiden Längsseiten paarweise angeordnete vertikale Stützen für das Boot aufweist, die bis über die Wasseroberfläche ragen, wenn sich das Fahrzeug im Wasser befindet. Zwei dieser Stützen sind jeweils über einen horizontal verschwenkbaren Arm am Fahrzeugrahmen in der Weise angelenkt, dass sie beim Aus- und Einfahren des Bootes hydraulisch nach außen verschwenkt und zum Festhalten des Bootes beim Transport nach innen an den Bootskörper gedrückt werden können. Über die horizontal verschwenkbaren Arme müssen die vertikalen Schwenkachsen der zugehörigen Lager alle von den Stützen ausgehenden Hebelkräfte aufnehmen, was ungünstige Verwindungen der Arme und Hebelkräfte auf die Lager zur Folge hat.

Aufgabe der Erfindung ist es, einen Bootstransporter der eingangs genannten Art anzugeben, der vielfältig einsetzbar ist und sich insbesondere auch einfach handhaben lässt.

Diese Aufgabe wird mit den im Anspruch 1 beschriebenen Merkmalen gelöst.. Bevorzugte Weiterbildungen sind in den abhängigen Ansprüchen beschrieben.

Die Erfindung hat den Vorteil, dass die Stützen zwei Funktionen ausführen. Einerseits wird das Manövrieren und Zentrieren eines Bootes beim Aufnehmen im Wasser erleichtert, weil sie ihre horizontale Position relativ zum Fahrzeugrahmen beim Verschwenken nicht verändern, und daher die Position des Bootes relativ zum Fahrzeug leicht überwacht werden kann. Andererseits kann die aufzunehmende Stützlast über die Gelenke mit horizontalen Schwenkachsen und die vertikal wirkenden Verstellzylinder relativ einfach auf den Fahrzeugrahmen abgeleitete werden. Es wirken keine Hebelkräfte in den Gelenken Da das Gewicht des zu tragenden Bootes über den Kiel oder Rumpf bei kiellosen Booten unmittelbar vom stabilen Tragrahmen des Transporters aufgenommen wird, bleibt der Schwerpunkt des Gespanns so tief wie möglich, und die Stützen müssen den Bootsrumpf lediglich von der Seite gegen Kippen stabilisieren, was durch die Hydraulikzylinder relativ einfach erfolgen kann. Hebelkräfte an den Lagern treten nicht auf.

Der Bootstransporter kann typischerweise dadurch beschrieben werden, dass die beiden Kettenlaufwerke jeweils über eine Schwenkachse vertikal auslenkbar an einem Tragrahmen angeordnet sind, dass die beiden Kettenlaufwerke separat antreibbar und/oder steuerbar sind, und dass mindestens ein drehbares Stützrad in der Art eines Bugrades vorhanden ist, so dass der Bootstransporter an mindestens drei Stützpunkten gestützt ist. Unter einem Kettenlaufwerk wird die Gesamtheit aus Raupenkette (Gleiskette), Antriebsrad und Führungsrad sowie gegebenenfalls Laufrädern und Rückführrädern verstanden. Kettenlaufwerke sind als solche bekannt. Das Stützrad ist um eine vertikale Achse auslenkbar, so dass es bei einer Kurvenfahrt dem Kurvenverlauf folgen kann. Das Stützrad kann ein Zwillingsrad sein. Alternativ kann es zweckmäßig sein, zwei in Fahrtrichtung nebeneinander liegende, separate Stützräder anzuordnen, um eine bessere Lastverteilung zu erreichen.

Durch die schwenkbare Aufhängung der beiden Kettenlaufwerke mit seitendifferenzierbarer Traktion und Steuerung wird in Verbindung mit dem mindestens einen Stützrad eine gute Geländeanpassung erreicht und damit eine gute Traktion auf verschiedensten Untergründen erreicht, was sich auch positiv auf Lenkmanöver und Bremsmanöver auswirkt. Insbesondere kann der Bootstransporter leicht und sicher über ungleichmäßige Hindernisse bewegt werden, da die Kettenlaufwerke unabhängig von einander verschiedenen Winkel zum Untergrund einnehmen können. Da der Tragrahmen und damit auch die zu befördernde Last beim Befahren von ungleichmäßigen Bodenerhebungen geringeren Kipp- und Wankbewegungen unterliegt, wird auch die Sicherheit verbessert. Ferner weist der Bootstransporter wegen seiner Geländegängigkeit einen großen Einsatzbereich auf.

Besonders vorteilhaft ist es, dass für jedes Kettenlaufwerk ein Hydraulikmotor zum Antrieb vorgesehen ist. Bevorzugt ist vorgesehen, dass jedes der beiden Kettenlaufwerke jeweils zwei Antriebsräder aufweist. Hierdurch kann bei Vorwärts- und Rückwärtsfahrt eine die gleiche Traktion erreicht werden.

Zur Aufnahme großer Traglasten ist es zweckmäßig, dass die beiden Achsen der Kettenlaufwerk-Aufhängungen jeweils zwischen den Schenkeln einer Gabel gelagert sind, wobei ein Schenkel Teil des Tragrahmens sein kann. Die außenliegenden Schenkel bilden außerdem einen seitlichen Schutz der Kettenlaufwerke.

Grundsätzlich können die Raupenketten aus metallischen Kettengliedern zusammengesetzt sein. Bevorzugt sind sie als Laufbänder aus Gewebe, Stahl und Reifengummi ausgebildet, so dass der Untergrund beim Befahren geschont wird.

Die Manövrierfähigkeit wird ferner dadurch verbessert, dass das mindestens eine Stützrad aktiv lenkbar ist, wozu insbesondere eine entsprechende hydraulische Betätigungseinrichtung vorgesehen ist. Durch ein aktiv lenkbares Stützrad kann eine hauptsächlich über die Kettenlaufwerke bewerkstelligte Lenkung unterstützt werden, und das Stützrad kann im Stand in eine gewünschte Richtung gelenkt werden, um zum Beispiel das Drehen des Bootstransportes auf der Stelle zu erleichtern und das Stützrad gegen Verschleiß zu schonen.

Es ist zweckmäßig im Bereich mittig zwischen den beiden Kettenlaufwerken eine Kielauflage für das aufzunehmende Boot anzuordnen. Mittels der Kielauflage wird die Gewichtslast des aufzunehmenden Boots im Wesentlichen aufgenommen. Der Schwerpunkt des Bootes kommt dabei möglichst nahe an der Aufhängung der Kettenlaufwerke zu liegen, so dass die Last im wesentlichen auf die Kettenlaufwerke übertragen wird. Das mindestens eine Stützrad nimmt somit nur einen kleinen Teil der Gewichtslast auf. Bevorzugt ist vorgesehen, dass die Kielauflage auswechselbar und/oder an den aufzunehmenden Bootsrumpf anpassbar ist.

Eine bevorzugte Weiterbildung der Erfindung besteht darin, dass der Bootstransporter klappbare Stützen (Rungen) zur insbesondere seitlichen Fixierung eines aufgenommenen Boots aufweist, wobei diese Stützen paarweise gegenüberliegend am Tragrahmen angeordnet sind. Insbesondere sind zwei Stützenpaare vorgesehen, die im vorderen und im hinteren Bereich des Bootsrumpfes des aufzunehmenden Boots angeordnet sind.

Es ist besonders vorteilhaft, dass die klappbaren Stützen paarweise hydraulisch betätigbar sind, wobei eine Endabschaltung vorgesehen ist, wenn die Stützen ihre Schwenkendposition erreicht haben und mit einer vorgegebenen Druckkraft am Bootsrumpf des aufzunehmenden Boots anliegen. Die hydraulische Betätigung erfolgt insbesondere über hydraulische Schwenkzylinder. Eine Endabschaltung kann z. B. durch ein hydraulisches Überdruckventil bewerkstelligt werden, dass im hydraulischen Betätigungskreis angeordnet ist.

Bevorzugt ist vorgesehen, dass die klappbaren Stützen verlängerbar ausgebildet und/oder an ihren Enden mit auswechselbaren Adaptern ausgestattet sind. Hierdurch kann eine optimale Anpassung an den aufzunehmenden Bootsrumpf erfolgen. Die Verlängerbarkeit der Stützen kann z. B. durch Teleskopelemente bewerkstelligt werden. Die auswechselbaren Adapter können z. B. als Steckadapter ausgeführt sein, die in die offenen Enden der Stützen eingesteckt werden.

Zur Verbesserung der Wankstabilität des aufzunehmenden Bootes ist es vorteilhaft, dass zwischen zwei gegenüberliegenden Stützen eines Stützenpaares eine Kette, ein Gurt, ein Seil oder dergleichen als Bugstütze oder als Heckstütze für das aufzunehmende Boot anbringbar ist. Hierzu sind an den Stützen entsprechende Aufnahmeelemente vorgesehen.

Die Ladungssicherung wird ferner dadurch erhöht, dass der Bootstransporter wenigstens eine versetzbare und/oder klappbare Bugstütze für das aufzunehmende Boot aufweist. Diese Bugstütze ist insbesondere hydraulisch betätigbar, was z. B. durch einen hydraulischen Schwenkzylinder bewerkstelligt werden kann.

Eine weitere bevorzugte Ausgestaltung der Erfindung besteht darin, dass ein zentrales Hydraulikaggregat vorhanden ist, welches zweckmäßigerweise von einem Dieselmotor angetrieben ist. Die Bezeichnung "zentral" bedeutet, dass dieses Hydraulikaggregat alle hydraulischen Verbraucher an dem Bootstransporter versorgt. Bevorzugt ist vorgesehen, dass dieses Hydraulikaggregat, und insbesondere auch der Dieselmotor, auf einem höhenverstellbaren Chassis (Plattform) angeordnet sind. Das hat den Vorteil, dass zumindest das Hydraulikaggregat mit seinem Antrieb angehoben werden kann, wenn der Bootstransporter ins Wasser bewegt wird, und dass an Land eine Absenkung erfolgen kann, um z. B. den Schwerpunkt des Bootstransporters niedrig zu halten und/oder eine Wartung des Hydraulikaggregats zu erleichtern. Die Höhenverstellung kann insbesondere stufenlos erfolgen, beispielsweise mittels einem oder mehreren hydraulischen Stellzylindern. Bevorzugt ist vorgesehen, dass das Chassis im vorderen Bereich des Bootstransporters oberhalb des mindestens einen Stützrades angeordnet ist.

Es ist zweckmäßig, dass das höhenverstellbare Chassis an wenigstens einer vertikalen oder geneigten Laufschiene gehaltert und geführt ist. Die Laufschiene selbst ist starr mit dem Tragrahmen des Bootstransporters verbunden, beispielsweise verschraubt und/oder angeschweißt.

Vorteilhafterweise erfolgt die hydraulische Anbindung des Hydraulikaggregats auf dem höhenverstellbaren Chassis über flexible Hydraulikschläuche. Ferner ist bevorzugt vorgesehen, dass die hydraulische Anbindung der Hydraulikmotoren für die Kettenlaufwerke und/oder der hydraulischen Stellantriebe (bspw. für die klappbaren Stützen) unter einer am Tragrahmen angeordneten begehbaren Abdeckung erfolgt. Somit kann beim Entladen und Beladen eine Bedienperson den Bootstransporter betreten, ohne dass eine Beschädigung der Leitungen zu befürchten ist.

Die Bedienung des Bootstransporters ist dadurch besonders einfach, dass er mittels einer zentralen Steuerung steuerbar ist, die über eine Bedieneinheit am Bootstransporter und/ oder eine mobile Bedieneinheit betätigt wird. Mittels der Steuerung können insbesondere folgende Funktionen ferngesteuert werden: Fahrbewegung Start, Fahrgeschwindigkeit, Fahrbewegung Stop (Bremsen), Lenken, Hydraulikaggregat anheben, Hydraulikaggregat absenken, Stützen einklappen und/oder Stützen ausklappen (keine abschließende Aufzählung). Mittels der mobilen Bedieneinheit, die bevorzugt kabellos mit der Steuerung kommuniziert, wird der Bootstransporter ferngesteuert. Damit kann der Aktionsradius des Bootstransporters im Wasser groß gehalten werden, weil die Bedienperson an Land bleiben kann. An Land kann die Bedienperson einen ausreichenden Sicherheitsabstand zum Bootstransporter einhalten.

Es kann auch zweckmäßig sein, auf dem Bootstransporter eine befahrbare Ladefläche für einen Bootsanhänger anzuordnen. Das hat den Vorteil, dass ein Boot auf dem Bootsanhänger ohne Umladung vom Bootsanhänger auf den Bootstransporter zu Wasser gelassen werden kann, nachdem der Bootsanhänger z. B. über Rampenbleche auf die Ladefläche gebracht wurde, um ihn dann quasi im Huckepack zu transportieren.

Nachfolgend wird die Erfindung anhand eines in den Figuren dargestellten Ausführungsbeispiels weiter beschrieben. Es zeigen schematisch:
- Fig. 1: einen Bootstransporter in einer Seitenansicht;
- Fig. 2: einen Querschnitt durch den in der Fig. 1 gezeigten Bootstransporter, gemäß dem in Fig. 1 angegebenen Schnittverlauf A-A;
- Fig. 3: eine stirnseitige Ansicht einer Kielauflage in Längsrichtung des Bootstransporters gesehen in einer ersten Stellung;
- Fig. 4: eine stirnseitige Ansicht der Kielauflage in einer zweiten Stellung; und
- Fig. 5: eine Draufsicht auf die Kielauflage in der zweiten Stellung.

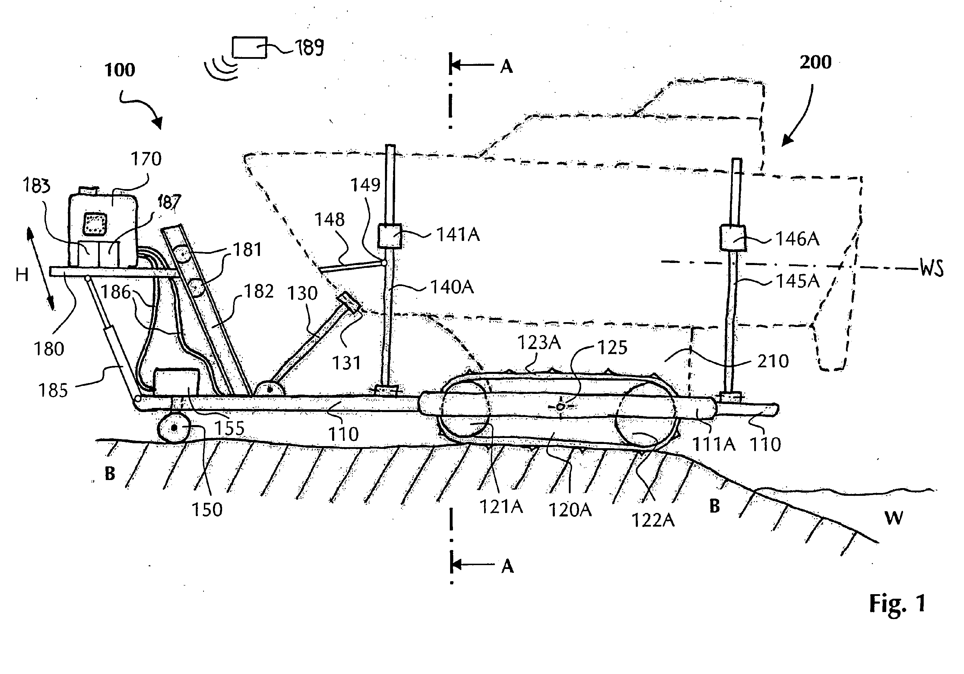

**Fig. 1** zeigt einen insgesamt mit 100 bezeichneten Bootstransporter. Der Bootstransporter 100 kann ein Boot aufnehmen, das strichliert angedeutet und mit 200 bezeichnet ist, um dieses zu Wasser W zu lassen, aus dem Wasser W an Land zu nehmen und an Land zu bewegen. Mit 210 ist der Kiel des aufzunehmenden Boots 200 bezeichnet.

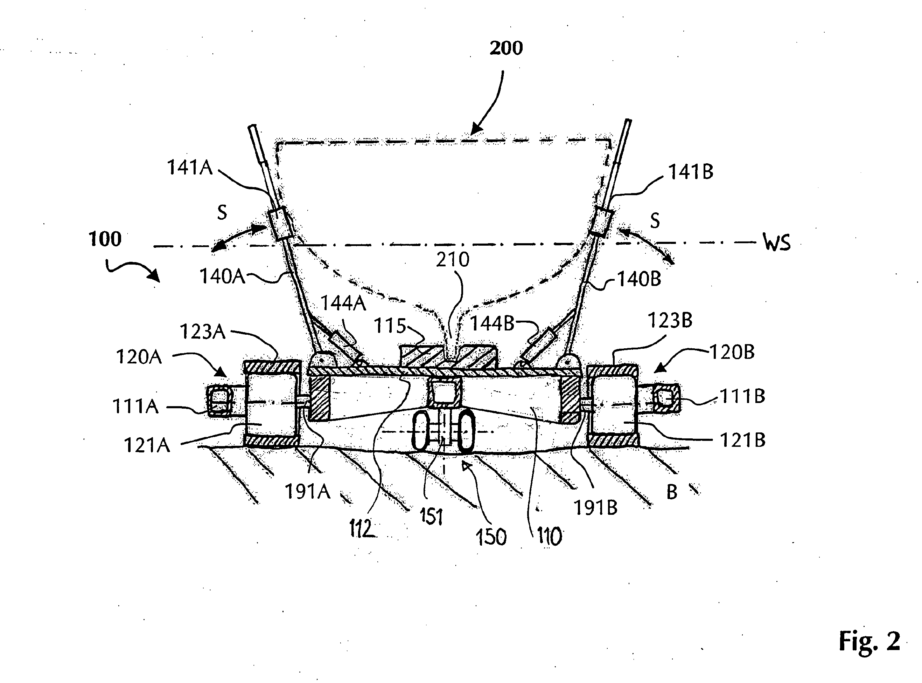

Der Bootstransporter 100 weist einen Tragrahmen 110 auf, wobei es sich z. B. um einen Leiterrahmen oder dergleichen handeln kann, die aus einzelnen miteinander verschweißten Rahmenelementen besteht. An diesem Tragrahmen 110 sind zwei parallele Kettenlaufwerke 120A und 120B angeordnet, die zum Antrieb und Lenken des Bootstransporters 100 dienen. In der Darstellung der Fig. 1 ist nur ein Kettenlaufwerk 120A sichtbar. Das andere Kettenlaufwerk 120B (Fig. 2) befindet sich auf der in dieser Darstellung nicht sichtbaren Seite des Bootstransporters 100. Zu jedem Kettenlaufwerk 120A, 120B gehören u. a. ein vorderes Antriebsrad 121 A, ein hinteres Antriebsrad 122A und eine Raupenkette 123A, die insbesondere als geschlossenes Laufband aus Reifenmaterial ausgeführt ist. Der Antrieb erfolgt über Hydraulikmotoren an den beiden Kettenlaufwerken 120A, 120B. Jedes Kettenlaufwerk 120A ist über eine Aufhängung vertikal schwenkbar am Tragrahmen 110 angelenkt, indem eine Gabel aus einem Abschnitt des Tragrahmens und einem Schenkel 111A vorhanden ist, der am Kettenlaufwerk 120A außen liegend seitlich entlang geführt ist. Gleiches gilt für das rechte Kettenlaufwerk 120B gemäß Fig. 2.

Die beiden Kettenlaufwerke 120A und 120B können unabhängig voneinander betrieben und/oder gesteuert werden. Hierdurch kann z. B. eine seitendifferenzierbare Traktion und Lenkung des Bootstransporters 100 erfolgen. Ferner kann der Bootstransporter 100 sehr präzise manövriert und auf kleinstem Raum gewendet werden. Die beiden Kettenlaufwerke 120A und 120B sind unabhängig voneinander um eine Schwenkachse 125 am Tragrahmen 110 in der Art einer Schwinge aufgehängt und somit unabhängig voneinander vertikal auslenkbar. Die Schwenkachse 125 befindet sich (bezogen auf die Länge) in der Mitte der Kettenlaufwerke 120A, 120B.

Im Bereich zwischen den beiden Kettenlaufwerken 120A und 120B ist eine Auflage 115 (Fig. 2) für den Kiel (210) des aufzunehmenden Bootes 200 oder im Fall eines kiellosen Bootes für den Bootsrumpf vorgesehen, über die das Hauptgewicht des Boots 200 am Tragrahmen 110 aufgenommen und über die beiden Achsen 125 der Kettenlaufwerke 120A und 120B in den Untergrund (Boden) B abgeleitet wird.

Am Tragrahmen 110 ist eine in Längsrichtung versetzbare und/oder klappbare bzw. schwenkbare Bugstütze 130 angeordnet, die das aufzunehmende Boot 200 im Bugbereich abstützt und so auch eine Abstützung des Boots 200 in Längsrichtung bewirkt. Die Bugstütze 130 kann manuell oder durch einen nicht dargestellten Hydraulikzylinder verschwenkt werden. Eine solche Stütze kann auch für den Heckbereich des Boots 200 vorgesehen sein. Mit 131 ist ein Adapter zur Anpassung an den Bootsrumpf bezeichnet.

Ferner sind am Tragrahmen 110 quer zur Längsrichtung Stützen (Rungen) 140A, 140B, 145A und 145B angeordnet, die paarweise im vorderen Bereich (Bugbereich) und im hinteren Bereich (Heckbereich) das aufzunehmende Boot 200 in seitlicher Richtung abstützen können. In der Darstellung der Fig. 1 ist nur die linke vordere Stütze 140A und die linke hintere Stütze 145A zu sehen. Die Stützen sind an ihren Enden mit Adaptern 141A bzw. 146A versehen, die seitlich am Bootsrumpf zur Anlage kommen. Ferner kann vorgesehen sein, dass die Stützen 140A, 140B, 145A und 145B in ihrer Länge einstellbar sind. Die Länge der Stützen 140A, 140B, 145A und 145B ist so bemessen, dass sie über den Wasserspiegel WS hinausragen, so dass ihre Position beim Einfahren und Auslassen eines Bootes zu Manövrierzwecken sichtbar und bei Bedarf zum Anlegen verwendbar sind.

Die Stützen 140A, 140B, 145A und 145B sind paarweise quer zur Längsrichtung des Bootstransporters 100 in einer vertikalen Ebene hydraulisch verschwenkbar. Die zugehörigen Schwenkgelenke 142 sind am Tragrahmen 110 befestigt, wobei ihre Schwenkachsen in Längsrichtung des Bootstransporters 100 ausgerichtet sind.

Mit 148 ist ein Gurt (oder dergleichen) bezeichnet, der optional oder ergänzend zu der Bugstütze 130 das Boot 200 im Bugbereich abstützt. Zur Anbringung des Gurts 148 sind an der linken und an der rechten Stütze 140A und 140B des vorderen Stützenpaares geeignete Aufnahmeelemente 149 in Form von Ösen vorgesehen. Ein solcher Gurt 148 kann auch zwischen dem hinteren Stützenpaar 145A und 145B vorgesehen sein, um das Heck des Boots 200 abzustützen.

Im vorderen Bereich des Tragrahmens 110 ist bezüglich der Breite des Bootstransporters 100 mittig ein um eine vertikale Achse drehbares Stützrad 150 angeordnet. Mit dem Stützrad 150 wird eine Abstützung im vorderen Bereich des Bootstransporters 100 erreicht, so dass der Bootstransporter 100 in Verbindung mit den pendelnd aufgehängten Kettenlaufwerken 120A und 120B ein Fahrgestell mit einer stabilen Dreipunktstützung aufweist. Das Stützrad 150 ist aktiv lenkbar, wozu eine entsprechende hydraulische Betätigungseinrichtung (Lenkeinrichtung) 155 vorgesehen ist. Die aktive Lenkung kann wahlweise deaktiviert sein, so dass der Lenkeinschlag des Stützrades 150 passiv der Lenkbewegung durch den Kettenantrieb folgt.

Zur Versorgung der hydraulischen Verbraucher (Hydromotoren, Schwenkzylinder für die Stützen, Lenkeinrichtung für das Stützrad, etc.) ist ein zentrales Hydraulikaggregat 170 im vorderen Bereich des Bootstransporters 100 vorhanden, das von einem nicht dargestellten Dieselmotor angetrieben wird. Das Hydraulikaggregat 170 und insbesondere auch der antreibende Dieselmotor (einschließlich dem Kraftstofftank) sind auf einem höhenverstellbaren Chassis 180 angeordnet. Das Chassis 180 ist beispielhaft als Plattform ausgebildet. Die Höhenverstellbarkeit ist mit dem Doppelpfeil H angedeutet. Das Chassis 180 ist über einen Laufwagen in einem nach vorn zum Bug geneigten Schienenpaar 182 verkippungssicher geführt, wobei jede Schiene des Schienenpaares 182 ein U-Profil aufweist, in welchem jeweils ein Paar Rollen 181 des Laufwagens geführt sind. Optional kann eine Feststelleinrichtung vorgesehen sein. Das bezüglich der vertikalen Richtung geneigte Schienenpaar 182 ist starr mit dem Tragrahmen 110 verbunden. Die Höhenverstellung des Chassis 180 erfolgt durch einen hydraulischen Stellzylinder 185. Abhängig von der Gewichtslast des Hydraulikaggregats 180 können mehrere Schienen und/oder Stellzylinder vorgesehen sein. Der Schwerpunkt der Einheit aus Hydraulikaggregat 170, Dieselmotor und Chassis 180 befindet sich im Wesentlichen oberhalb des Stützrades 150, so das dessen Gewicht auf das Stützrad 150 abgeleitet wird.

Wenn der Bootstransporter 100 ins Wasser gefahren wird, kann das Chassis 180 entlang der Schiene 182 bis oberhalb des Wasserspiegels WS angehoben werden, wodurch der Bootstransporter 100 bis in entsprechend große Wassertiefen einfahren kann, während das Chassis 180 einschließlich Hydraulikaggregat 170, Dieselmotor und Kraftstofftank, sowie gegebenenfalls sonstiger Komponenten, wie z. B. einer Aggregatssteuerung oberhalb der Wasseroberfläche verbleibt. An Land kann das Chassis 180 abgesenkt werden, um z. B. den Schwerpunkt des Bootstransporters 100 niedrig zu halten und/oder um Wartungsmaßnahmen (Betankung, Ölstandskontrolle, Reparaturen, etc.) durchführen zu können.

Die hydraulische Anbindung des Hydraulikaggregats 170 auf dem höhenverstellbaren Chassis 180 erfolgt über flexible Hydraulikschläuche 186. Im Bereich des Tragrahmens 110 ist zur hydraulischen Anbindung der hydraulischen Verbraucher bevorzugt eine starre Verrohrung vorgesehen, wobei diese Verrohrung insbesondere geschützt angeordnet und/oder mit einem Trittschutz versehen ist, um eine Beschädigung und den Austritt von Hydrauliköl zu vermeiden.

**Fig. 2** zeigt einen Schnitt durch den Bootstransporter 100, gemäß dem in der Fig. 1 angegebenen Schnittverlauf A-A. Das Stützrad 150 ist als Zwillingsrad ausgebildet, welches am Tragrahmen 110 befestigt und um eine vertikale Achse 151 drehbar ist. Das höhenverstellbare Chassis 180 ist hier nicht dargestellt, um die Darstellung übersichtlich zu halten.

Die Darstellung der Fig. 2 veranschaulicht die beabstandete Anordnung der beiden Kettenlaufwerke 120A und 120B und die Antriebsräder 121A, 121 B, welche jeweils mit einem Fahrantrieb, bestehend aus einem Hydraulikmotor und einem Getriebe (nicht dargestellt) wirkverbunden sind. Die vertikal pendelnde Aufhängung der beiden Raupenlaufwerke 120A, 120B erfolgt über die quer zur Fahrtrichtung ausgerichteten starren Achsen 191A und 191B, die innenseitig am Tragrahmen 110 und außenseitig an den Schenkeln 111A, 11 B einer Gabel in horizontaler Ausrichtung gelagert sind, so dass die Achslast gleichmäßig auf die Schenkel 111A und den Tragrahmen 110 verteilt wird.

Im Bereich des Tragrahmens 110 ist oberhalb der Hydraulikleitungen eine trittfeste Abdeckung 112 vorhanden. Mit 115 ist eine auswechselbare Kielauflage für das Boot 200 bezeichnet. Über die Kielauflage wird die Hauptgewichtslast des Boots 200 aufgenommen und in den Tragrahmen 110 abgeleitet.

Fig. 2 veranschaulicht ferner die schwenkbare Anordnung des Paares der vorderen seitlichen Stützen 140A und 140B. Die vertikale Verschwenkbarkeit ist durch die Doppelbogenpfeile S veranschaulicht. Sie wird durch hydraulische Schwenkzylinder 144A und 144B bewirkt. Bei den Schwenkzylindern 144A und 144B handelt es sich bevorzugt um doppelt wirkende Hydraulikzylinder, wodurch eine aktive Verschwenkung der Stützen 140A und 140B in beiden Schwenkrichtungen erfolgen kann. Die Stützen 145A und 145B des hinteren Paares sind in gleicher Weise mit hydraulischen Schwenkzylindern versehen. Jedes Paar der seitlichen Stützen 140A, 140B, 145A und 145B kann unabhängig betätigt werden.

Beim Aufnehmen eines Bootes 200 im Wasser werden alle Stützen 140A, 140B, 145A, 145B nach außen aufgespreizt, um dem Boot 200 möglichst viel Seitenfreiheit zu bieten. Sobald das Boot 200 seine Endposition oberhalb der Kielauflage erreicht hat, werden die Stützen 140A, 140B des vorderen, bugseitigen Paares zum Sichern des Boots 200 und Zentrieren des Bugbereichs des Bootes 200 zeitgleich geschlossen, d.h. scherenartig nach innen verschwenkt, wobei eine Endabschaltung vorgesehen ist, wenn die Stützen 140A und 140B ihre Endposition erreicht haben, die dadurch festgestellt wird, dass sie mit einer vorgegebenen Druckkraft am Bootsrumpf des aufzunehmenden Boots 200 andrücken. Die vorgegebene Druckkraft wird über Druckbegrenzer (nicht dargestellt) in der Hydraulikanlage gesteuert. Dann wird der Bootstransporter zum Ufer gefahren, wobei sich der Bootsrumpf mit abnehmender Wassertiefe auf die Kielaufnahme 115 absenkt. Gleichzeitig werden die Stützen 145A, 145B des heckseitigen Paares nach innen verschwenkt, um den Heckbereich des Bootes 200 über der Kielauflage zu zentrieren. Sobald das Boot 200 auf der Kielauflage 115 aufsitzt, werden die Stützen 145A, 145B des heckseitigen Paares zum Sichern des Bootes 200 weiter nach innen verschwenkt, wobei wiederum wobei eine Endabschaltung vorgesehen ist, wenn die Stützen 140A und 140B ihre Endposition erreicht haben, die dadurch festgestellt wird, dass sie mit einer vorgegebenen Druckkraft am Bootsrumpf andrücken.

Die Stützen 140A, 140B des bugseitigen Paares können beim aufnehmen eines Bootes 200 alternativ oder vorbereitend zunächst einmal nach innen geschwenkt werden, um das einlaufende Boot 200 abzubremsen. Dazu wird der Bug des Bootes 200 in den verbleibenden engen Raum zwischen den Stützen 140A, 140B des bugseitigen Paares gelenkt, wo er wie von einer Gabel auf zwei Seiten von den Stützen 140A, 140B des bugseitigen Paares aufgefangen wird. Dann werden die Stützen 140A, 140B des bugseitigen Paares nach außen geschwenkt, um das Boot 200 unter ständiger Zentrierung weiter nach vorne fahren zu lassen, wo es schließlich durch Andrücken der Stützen 140A, 140B des bugseitigen Paares gesichert wird, wie oben beschrieben.

Das Auslassen eines Bootes 200 beim zu Wasser lassen erfolgt naturgemäß in der umgekehrten Reihenfolge.

Der Bootstransporter weist eine Steuereinrichtung 183 auf, über welche alle hydraulischen Komponenten einschließlich der Hydraulikmotoren 190A, 190B gesteuert werden. Die Bedienung der Steuereinrichtung kann über ein Bedienteil 187 am Chassis 180 oder ferngesteuert über ein mobiles Bedienteil 189 erfolgen, welches drahtlos mit der Steuereinrichtung 183 kommuniziert.

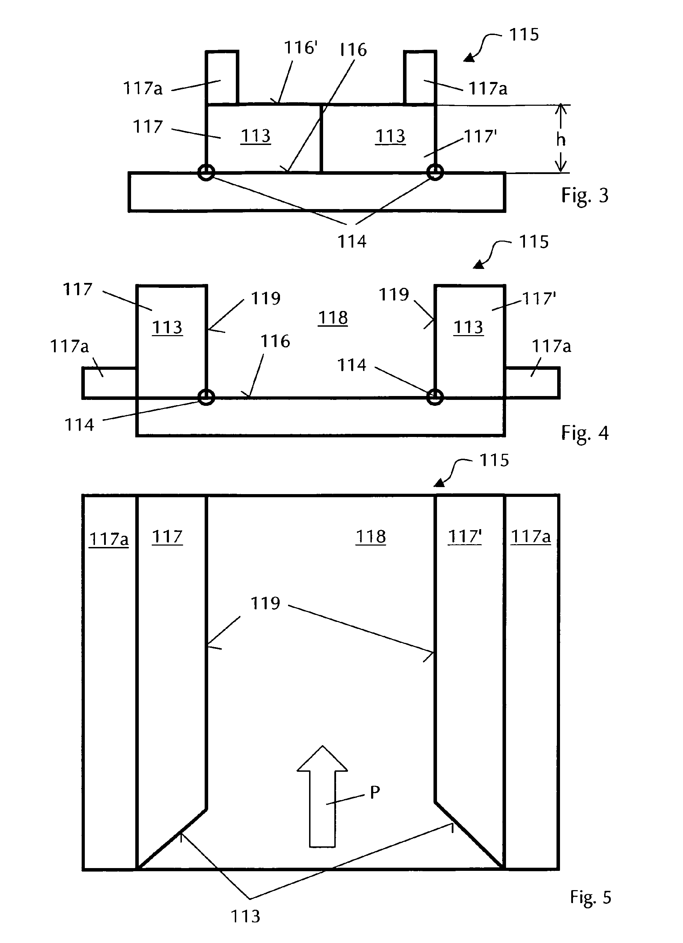

Gemäß Fig. 3, Fig. 4 und Fig. 5 ist die Auflage 115 für den Kiel 210 des zu transportierenden Bootes so ausgebildet, dass wahlweise eine erste oder eine zweite, erhöhte Auflagefläche 116, bzw. 116' einstellbar sind. Auf diese Weise kann eine Anpassung an unterschiedliche Schiffstypen, Kiele und Bootsrümpfe erfolgen, die auf Grund ihrer Bauart mit unterschiedlichem Abstand vom Tragrahmen 110 bzw. vom Untergrund B transportiert werden müssen, insbesondere um ausreichend Bodenfreiheit beim Überfahren von Bodenunebenheiten zu gewährleisten.

Dazu ist die Auflage 115 mit zwei Lagerböcken 117, 117' versehen, die in zwei Stellungen angeordnet werden können. In einer ersten Position gemäß Fig. 3 liegen sie nebeneinander auf der ersten Auflagefläche 116 und decken diese ab. Sie bilden auf Grund ihrer Höhe h die zweite, erhöhte Auflagefläche 116'. In der zweiten Position sind sie voneinander beabstandet, und geben zwischen sich die erste Auflagefläche 116 frei. Gleichzeitig bilden sie zwischen sich einen Einlaufkanal 118 für einen Kiel eines Bootes, wobei ihre Seitenflächen 119 die Wände des Einlaufkanals 118 bilden. Der Einlaufkanal 118 erleichtert das Aufnehmen eines Kielbootes im Wasser. Seitliche Begrenzungen 111 an der Oberseite der Lagerböcke 117, 117' bilden einen weiteren Einlaufkanal, wenn die Lagerböcke 117, 117' nach innen in die erste Position gebracht sind.

Jeder der im Querschnitt rechteckigen Lagerböcke 117, 117' ist über ein Scharnier 114 an einer Längskante schwenkbar angelenkt. Ein Wechsel zwischen der ersten und zweiten Position erfolgt durch einfaches Umklappen um die Scharniere 114. Die Seitenflächen des Rechtecks bestimmen die Breite der ersten und zweiten Auflagefläche 116, 116' und die Höhe des Einlaufkanals 118. Grundsätzlich können alternativ zu den Scharnieren 114 auch andere Vorrichtungen vorgesehen sein, mit welchen die Lagerböcke 117, 117' jeweils zwischen zwei beabstandeten Positionen umgesetzt werden können, beispielsweise mittels eines Parallelogrammgestänges oder mittels Schienen. Ferner kann es ausreichend sein, wenn nur ein einziger Lagerbock vorhanden ist, der auch in Längsrichtung des Bootstransporters 100 umklappbar sein kann, wenn er in der zurück geklappten Position bugseitig vor der ersten Lagerfläche 116 angeordnet ist. Ein Einlaufkanal kann dann allerdings nicht gebildet werden.

Aus der Draufsicht der Fig. 4 wird ferner ersichtlich, dass die der Heckseite des Bootstransporters zugewandten Stirnseiten 113 der Lagerböcke 117, 117' abgeschrägt sind, um das Einfädeln eines Kiels gemäß Pfeil 112 zu erleichtern, wenn ein Boot gemäß Pfeil P beim Aufnehmen im Wasser in den Bootstransporter 100 manövriert wird.

## Patentansprüche

1. Selbstfahrender amphibischer Bootstransporter,
**dadurch gekennzeichnet,**
**dass** er vertikal verschwenkbare Stützen (140A, 140B; 145A, 145B) zur seitlichen Fixierung eines aufgenommenen Boots (200) aufweist, wobei diese Stützen (140A, 140B; 145A, 145B) paarweise gegenüberliegend an einem Tragrahmen (110) angeordnet sind, dass die Stützen (140A, 140B; 145A, 145B) hydraulisch paarweise in jeweils einer vertikalen Ebene verschwenkbar sind, so dass sie zur Aufnahme und zum Absetzen eines Bootes paarweise in der betreffenden vertikalen Ebene spreizbar oder schließbar sind ,und dass sie so lang sind, dass ihre freien Enden über einen Wasserspiegel (WS) herausragen, wenn sich der Bootstransporter (100) zur Aufnahme oder zum Absetzen eines Bootes (200) im Wasser befindet.

2. Bootstransporter (100) nach Anspruch 1,
**dadurch gekennzeichnet,**
**dass** die Paare von Stützen (140A, 140B; 145A, 145B) unabhängig voneinander verschwenkt werden können.

3. Bootstransporter (100) nach Anspruch 2,
**dadurch gekennzeichnet,**
**dass** die klappbaren Stützen (140A, 140B; 145A, 145B) paarweise hydraulisch betätigbar sind, wobei eine Endabschaltung vorgesehen ist, wenn die Stützen (140A, 140B; 145A, 145B) ihre Schwenkendposition erreicht haben und mit einer vorgegebenen Druckkraft am Bootsrumpf des aufzunehmenden Boots (200) anliegen.

4. Bootstransporter (100) nach einem der vorausgehenden Ansprüche,
**dadurch gekennzeichnet,**
**dass** er ein zentrales Hydraulikaggregat (170) aufweist, welches insbesondere von einem Dieselmotor angetrieben ist, und dass das Hydraulikaggregat (170) und der Dieselmotor, auf einem höhenverstellbaren Chassis (180) angeordnet sind.

5. Bootstransporter (100) nach Anspruch 16,
**dadurch gekennzeichnet,**
**dass** das höhenverstellbare Chassis (180) an wenigstens einer vertikalen oder zur Vertikalen geneigten Laufschiene (182) gehaltert und geführt ist.

6. Bootstransporter (100) nach Anspruch 15, 16 oder 17,
**dadurch gekennzeichnet,**
**dass** die hydraulische Anbindung des Hydraulikaggregats (170) auf dem höhenverstellbaren Chassis (180) über flexible Hydraulikschläuche (186) erfolgt.

7. Bootstransporter (100) nach einem der vorhergehenden Ansprüche,
**dadurch gekennzeichnet,**
**dass** am Tragrahmen (110) eine Auflage (115) mit einer ersten Auflagefläche (116) für den Kiel (210) oder den Rumpf eines zu transportierenden Bootes (200) vorhanden ist, und dass die Auflage (115) mit mindestens einem Lagerbock (117, 117') zur wahlweisen Bildung einer zweiten, erhöhten Auflagefläche (116') versehen ist.

8. Bootstransporter (100) nach einem der vorhergehenden Ansprüche,
**dadurch gekennzeichnet,**
**dass** ein Paar von Lagerböcken (117, 117') vorhanden sind, welche in zwei Positionen anordenbar sind, dass sie in einer ersten Position die zweite, erhöhte Auflagefläche (116') und in einer zweiten Position beabstandet voneinander sind, wobei zwischen den beiden Lagerböcken ein Einlaufkanal (118) für den Kiel (210) eines Bootes (200) gebildet wird, und zwischen den beabstandeten Lagerböcken (117, 117') die erste Auflagefläche (116) freiliegt.

9. Bootstransporter (100) nach einem der vorausgehenden Ansprüche,
**dadurch gekennzeichnet,**
**dass** das Stützrad (150) aktiv lenkbar ist.

10. Bootstransporter (100) nach Anspruch 19,
**dadurch gekennzeichnet,**
**dass** die aktive Lenkung des Stützrads (150) wahlweise deaktivierbar ist.

11. Bootstransporter (100) nach einem der vorausgehenden Ansprüche,
**dadurch gekennzeichnet,**
**dass** eine Fernsteuerung, insbesondere eine drahtlose Fernsteuerung, vorhanden ist.

12. Bootstransporter (100) nach einem der vorhergehenden Ansprüche,
**dadurch gekennzeichnet,**
**dass** er eine Ladefläche zur Aufnahme eines Bootsanhängers aufweist.
